**Europäisches Patentamt**

**European Patent Office**

**Office européen des brevets**

(19)

(11) Numéro de publication: **0 025 023**

**A1**

(12)

# DEMANDE DE BREVET EUROPEEN

(21) Numéro de dépôt: **80830068.5**

(22) Date de dépôt: **27.08.80**

(51) Int. Cl.³: **F 03 D 3/04**

(30) Priorité: **28.08.79 IT 952079**

(43) Date de publication de la demande:
**11.03.81 Bulletin 81/10**

(84) Etats Contractants Désignés:
**AT BE CH DE FR GB LI LU NL SE**

(71) Demandeur: **Baccini, Adolfo**
**Corso Italia 23**
**I-50123 Firenze(IT)**

(72) Inventeur: **Baccini, Adolfo**
**Corso Italia 23**
**I-50123 Firenze(IT)**

(74) Mandataire: **Martini, Lazzaro**
**Ufficio Brevetti Ing. Lazzaro Martini Via Brunelleschi, 1**
**I-50123 Firenze(IT)**

(54) **Moteur éolien à flux radial, avec rotor partiellement protégé.**

(57) Un moteur éolien avec rotor à flux radial, à axe horizontal (1) et muni de pales (3) à profil semi-circulaire; la structure des pales (3) est en treillis simple ou multiple, munie d'un revête-ment et reliée entre les différentes pales; la moitié inférieure (5) du rotor est protégée du vent; le rotor est également mobile autour de son propre axe médian vertical (YY) afin d'assurer la condition de flux radial du vent.

EP 0 025 023 A1

./...

Fig. 1

- 1 -

<u>Moteur éolien à flux radial, avec rotor partiel-
lement protégé.</u>

L'invention concerne un moteur éolien. Un rotor
à axe horizontal, composé de plusieurs pales, de
grandes dimensions, fixées au moyeu en guise de
rayons, est protégé du vent sur au moins sa moitié inférieure et tourne autour de son axe médian
vertical.

Le vent, comme on le sait, représente une source
naturelle, intarissable d'énergie cinétique.

L'utilisation de l'énergie éolienne a été jusq'à
nos jours limitée à des puissances assez réduites
en raison de la préférence accordée à la construction d'aéromoteurs à flux axial et dont l'hélice
a un indice de fonctionnement rapide et donc des
pales de longueur limitée.

En outre, sachant que la puissance débitée par un
aéromoteur est directement proportionnelle au carré
du diamètre du rotor, il apparait donc nécessaire
de réaliser des rotors de grand diamètre afin
d'obtenir des puissances élevées.

Cette invention a pour but de remédier à toutes ces difficultés.

L'invention, telle qu'elle est caractérisée dans les revendications, résoud le problème consistant en la réalisation d'un rotor éolien à axe horizontal de grand diamètre pouvant fonctionner par tous les vents.

Ceci est obtenu avec des pales à flux radial, fixées en rayons à un moyeu horizontal et entre el les par des contreventements; une queue pourvoit à faire tourner horizontalement le moyeu sur un palier, fixe, par rapport à la direction du vent; une paroi cylindrique protège la moitié inférieure du rotor contre le vent.

Les avantages obtenus grâce à cette invention con sistent essentiellement dans le fait que les pales sont à géométrie plane de préférence semi-cir culaire, avec une structure réticulaire rigide et légère, mais robuste et indéformable sous la pres sion de vents même très forts de sorte qu'elles peuvent avoir des dimensions outrepassant les limites actuellement atteintes par les pales à hélice; l'arbre du rotor dépasse des pales et ses paliers roulent sur un guide circulaire horizontal; la zone située sous le moyeu du rotor est toujours protégée du vent; l'énergie du rotor est recueillie par un ou plusieurs générateurs de courant situés à l'extrémité de l'arbre du rotor ou en dessous de celui-ci.

L'invention sera décrite ci-dessous plus en détail et à l'aide des dessins annexés donnés seulement en tant qu'exemple schématique de réalisation et à ne pas considérer de façon restrictive.

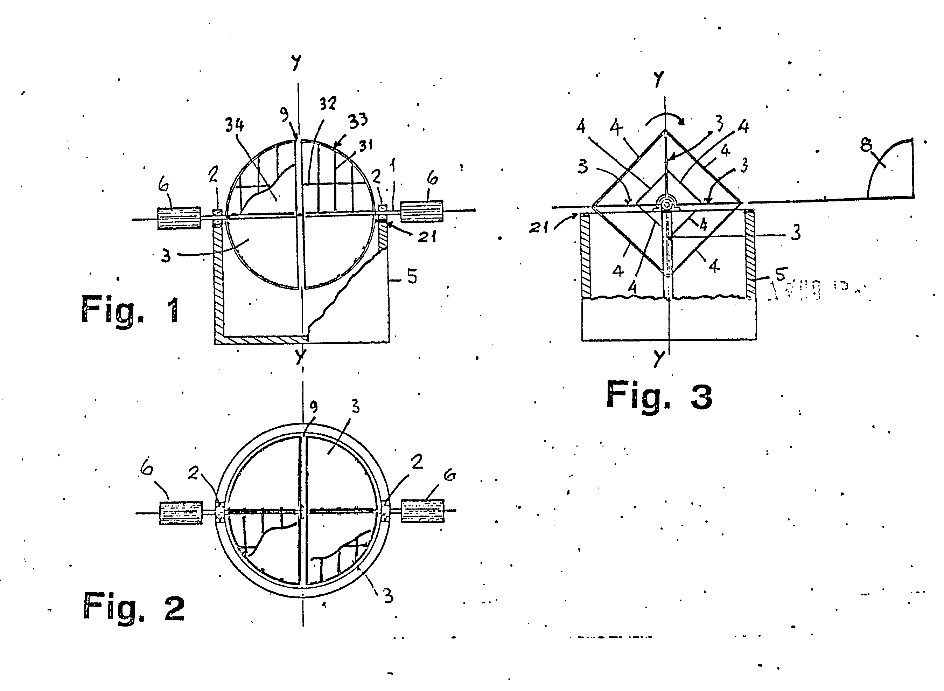

La FIG. 1 représente la vue de face, en partie
en coupe, d'un moteur éolien conforme à l'invention; la FIG. 2 représente la vue en plan de l'aéromoteur de la FIG. 1; la FIG. 3 représente la
vue latérale, en partie en coupe de cet aéromoteur.
Le moteur éolien conforme à l'invention et se référant aux dessins annexés, comprend: un rotor
avec un arbre (1), monté fou sur deux paliers (2)
extérieurs aux pales (3) et roulant sur un guide
(21 ) circulaire, horizontal, au sommet d'une
construction portante (5); plusieurs pales (3)
égales (par exemple quatre), à profil semi-circulaire, avec le côté droit en correspondance
et solidaire avec l'arbre (1) et disposées en
croix: chaque pale étant formée par une structure en treillis simple ou multiple avec des éléments perpendiculaires (31 ) et parallèles (32)
à l'arbre (1) dont les extrémités libres sont
fixées à un élément de contour (33) et par une
paroi (34) de revêtement mince, mais résistante
aux agents atmosphériques et les différentes
pales (3) étant reliées entre elles de façon rigide par l'intermédiaire de plusieurs contrevents
(4); au moins une queue (8 ) en drapeau, disposée en un plan perpendiculauire à l'arbre (1)
et reliée au rotor, ayant le rôle de faire bouger - sous l'action du vent - le dit rotor autour
de son propre axe médian vertical (YY) et d'assurer le condition de flux radial du vent sur les
pales; un générateur (6) de courant éléctrique,
monté sur la ou les deux extrémités de l'arbre
(1 ) ou placé différemment à l'intérieur de la construction (5) en dessous du rotor et actionné par l'arbre (1 ) par l'intermédiaire d'un
organe de transmission placé à l'extérieur ou à
l'intérieur du rotor; dans ce dernier cas les
pales (3) sont interrompues verticalement par
une ouverture radiale (9).

La structure portante (5) est de préférence à
plan circulaire, avec le paroi latérale pleine,
réalisée au moment de la construction ou ajoutée,
et dans ce cas elle est fixe ou mobile, pour
protéger du vent au moins la moitié inférieure
du rotor: en cas de vent exceptionnellement fort,
cette protection peut être étendue, avec des
éléments supplémentaires, au dessus de l'arbre
(1) du rotor.

- 5 -

R E V E N D I C A T I O N S

1 ) Moteur éolien avec rotor à pales de grand développement radial caractérisé par le fait que les pales (3) ont une structure en treillis et qu'elles sont reliées entre elles et à un arbre (1) horizontal; qu'au moins la moitié inférieure du rotor est protégée du vent; et que le rotor est mobile autour de son propre axe médian vertical (YY).

2) Moteur éolien selon 1 ) caractérisé par le fait que la structure des pales (3) est en treillis simple ou multiple avec un profil en arc de cercle, avec plusieurs contreventements (4) entre les pales (3 ) et avec un revêtement (34) à surface plane ou concave, en matériau mince mais résistant aux agents atmosphériques, étendu sur tout ou partie de la surface des pales (3) destinée à être battue par le vent.

3) Moteur éolien selon 1) caractérisé par le fait que l'arbre (1) du rotor est muni de paliers (2) extérieurs aux pales (3), roulant sur un guide (21) horizontal, concentrique à l'axe médian vertical (YY ) du rotor, sous l'effet de la poussée du vent agissant sur une queue (8 ) reliée au rotor.

4) Moteur éolien selon 1) caractérisé par le fait que l'arbre (1) est appuyé sur le sommet d'une construction (5) dont les parois en élévation, font ou non partie de la construction (5), sont fixes ou mobiles verticalement et, sont fermées pour protéger au moins la moitié inférieure du rotor contre le vent.

5)    Moteur éolien selon 1) caractérisé par le fait que l'arbre (1) du rotor est relié à un ou plusieurs générateurs de courant (6) placés à l'extrémité de l'arbre (1) ou à l'intérieur de la construction (5).

Fig. 1

Fig. 2

Fig. 3

Office européen
des brevets

**RAPPORT DE RECHERCHE EUROPEENNE**

Numéro de la demande

EP 80 83 0068

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendication concernée | |
| | DE - A - 2 423 612 (WEISS)<br>  * Page 4, ligne 14 - page 5, ligne 21 *<br><br>-- | 1,3,4, 5 | F 03 D 3/04 |
| | DE - C - 352 562 (HOLST)<br>  * Page 2, lignes 14-64 *<br><br>-- | 1-4 | |
| | US - A - 1 798 211 (LAW)<br>  * Page 1, lignes 29-75 *<br><br>---- | 2,4 | |

**DOMAINES TECHNIQUES RECHERCHES (Int. Cl. ³)**

F 03 D

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

X Le présent rapport de recherche a été établi pour toutes les revendications

| Lieu de la recherche | Date d'achèvement de la recherche | Examinateur |
|---|---|---|
| La Haye | 24-11-1980 | DE WINTER |

OEB Form 1503.1  06.78